# EUROPEAN PATENT SPECIFICATION

(11) **EP 3 835 842 B1**
(45) Date of publication and mention of the grant of the patent: **19.03.2025**
(21) Application number: 18929099.2
(22) Date of filing: 10.08.2018
(51) Int. Cl.: G02B 7/14, G03B 17/14, G03B 3/02, G03B 35/04, G03B 13/32, G03B 5/04

(54) **ACCESSORY AND CAMERA SYSTEM WITH SAME**
ZUBEHÖR UND KAMERASYSTEM DAMIT
ACCESSOIRE ET SYSTÈME DE CAMÉRA COMPRENANT CE DERNIER

(43) Date of publication of application: 16.06.2021
(60) Divisional application: 22193847.5
(73) Proprietor: CANON KABUSHIKI KAISHA, OHTA-KU Tokyo 146-8501 (JP)
(72) Inventor: YAMAZAKI Toshinori, Tokyo 146-8501 (JP); TAMURA Masahisa, Tokyo 146-8501 (JP); SATO Takehiko, Tokyo 146-8501 (JP); INOUE Katsuhiro, Tokyo 146-8501 (JP); NAKASHITA Daisuke, Tokyo 146-8501 (JP); IZUMI Mitsuhiro, Tokyo 146-8501 (JP); TAKANO Seishiro, Tokyo 146-8501 (JP)
(74) Representative: TBK
(86) International application number: PCT/JP2018/030072
(87) International publication number: WO 2020/031374

(56) References cited:
- WO-A1-2017/047592
- CN-A- 107 018 301
- CN-A- 107 076 962
- CN-A- 108 027 490
- JP-A- 2003 177 294
- JP-A- 2003 177 294
- JP-A- 2005 070 711
- JP-A- 2018 102 714
- JP-A- H09 281 376
- JP-A- H09 281 376
- US-A1- 2013 051 780
- US-A1- 2013 271 860
- US-A1- 2014 016 920

## Description

### Technical Field

The present invention relates to accessories and camera systems including the same.

### Background Art

A lens apparatus discussed in Patent Literature (PTL) 1 has been known as a lens apparatus that includes a third operation ring for changing a function in addition to a zoom ring and a focus ring. The lens apparatus discussed in PTL 1 includes a zoom operation ring, a focus operation ring, and a custom operation ring arranged in this order from a camera body side. One of an aperture value changing function, a shutter speed changing function, an exposure correction function, and a continuous image capturing speed adjustment function can be assigned to the custom operation ring.

### Citation List

### Patent Literature

PTL 1: Japanese Patent Laid-Open No. 2003-177294
PTL2: Japanese Patent Application No. JP 2003 177294 A
PTL3: Chinese Patent Application No. CN 108 027 490 A
PTL4: Japanese Patent Application No. JP H09 281376 A
PTL5: Chinese Patent Application No. CN 107 076 962 A
PTL6: Japanese Patent Application No. JP 2005 070711 A

### Summary of Invention

### Technical Problem

In the lens apparatus discussed in PTL 1, the custom operation ring and the focus operation ring are arranged near each other, and in a case where the two operation rings arranged near each other have a similar surface structure, it is often difficult for a user to discriminate between the two operation rings. PTL 1 is silent on surface structures of the custom operation ring and the focus operation ring.

PTL2 discloses an accessory according to the preamble portion of claim 1. Further conventional accessories are disclosed in PTL3 to PTL6.

The present invention is directed to an accessory where two operation members are easy to discriminate from each other, and a camera system including the same.

### Solution to Problem

For the purpose of achieving the above described objects, an accessory includes all features of claim 1. Further advantageous developments are subject-matter of the dependent claims.

### Advantageous Effects of Invention

The present invention realizes an accessory where two operation members are easy to discriminate from each other and a camera system including the same.

### Brief Description of Drawings

[Fig. 1] Fig. 1 is a block diagram illustrating a camera system 300.
[Fig. 2A] Fig. 2A is an external view illustrating a first interchangeable lens 100A viewed from a first direction.
[Fig. 2B] Fig. 2B is an external view illustrating the first interchangeable lens 100A viewed from a second direction.
[Fig. 3] Fig. 3 is a schematic view illustrating an exterior of the first interchangeable lens 100A.
[Fig. 4A] Fig. 4A is a schematic first cross-sectional view illustrating shapes of a first exterior member 107 and a second exterior member 108.
[Fig. 4B] Fig. 4B is a schematic second cross-sectional view illustrating shapes of the first exterior member 107 and the second exterior member 108.
[Fig. 5A] Fig. 5A is an external view illustrating a second interchangeable lens 100B viewed from the first direction.
[Fig. 5B] Fig. 5B is an external view illustrating the second interchangeable lens 100B viewed from the second direction.
[Fig. 6A] Fig. 6A is an external view illustrating a third interchangeable lens 100C viewed from the first direction.
[Fig. 6B] Fig. 6B is an external view illustrating the third interchangeable lens 100C viewed from the second direction.
[Fig. 7A] Fig. 7A is an external view illustrating a fourth interchangeable lens 100D viewed from the first direction.
[Fig. 7B] Fig. 7B is an external view illustrating the fourth interchangeable lens 100D viewed from the second direction.
[Fig. 8] Fig. 8 is a schematic view illustrating a camera system 300A including an adaptor 400.
[Fig. 9] Fig. 9 is an external view illustrating the adaptor 400.

### Description of Embodiments

Various exemplary embodiments of the present invention will be described below with reference to the attached drawings.

### (Block Structure of Camera System)

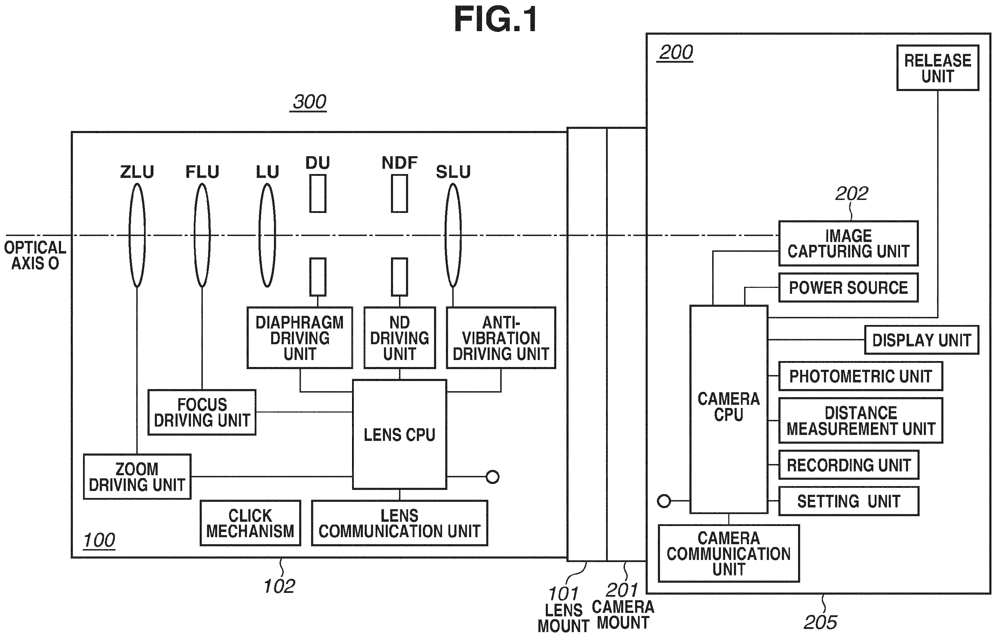

First, a block structure of an interchangeable lens 100 and a camera body (camera body) 200 according to an exemplary embodiment of the present invention will be described below with reference to Fig. 1. Fig. 1 is a block diagram illustrating a camera system 300 including the interchangeable lens (optical device, accessory, lens apparatus) 100 and the camera body 200.

### (Block Structure of Camera Body)

The camera body 200 includes an image capturing unit 202 that is a photoelectric conversion element or image sensor including a charge-coupled device (CCD) image sensor or complementary metal oxide semiconductor (CMOS) image sensor and converts optical information about subjects that is acquired via the interchangeable lens 100 into electric signals (photoelectrically converts subject images). The camera body 200 further includes a camera mount (first mount portion) 201 that is connected to a lens mount (second mount portion) 101 of the interchangeable lens 100, and a camera housing 205 including the image capturing unit 202 and others.

The camera body 200 further includes a camera communication unit that communicates with a lens communication unit of the interchangeable lens 100, a photometric unit that measures an intensity of light, a distance measurement unit, and a recording apparatus that records data such as captured images and captured moving images, in addition to the image capturing unit 202 and the camera mount 201. The camera body 200 further includes a setting unit that performs settings for, for example, image capturing conditions including shutter speed, a release unit (shutter button) which is operable by a user, a display unit that displays various types of information to a user, and a power source. The setting unit. The camera body 200 further includes a camera central processing unit (camera CPU) that is a control unit for controlling the image capturing unit 202.

### (Block Structure of Interchangeable Lens)

The interchangeable lens 100 is attachable to and detachable from the camera body 200. The interchangeable lens 100 includes a lens barrel 102 and the lens mount (camera accessory mount) 101. Electrical communication between the interchangeable lens 100 and the camera body 200 is performed via the lens communication unit and the camera communication unit that include a plurality of electrical contact portions to electrically connect to each other. Various types of information, such as power supply information and control information, can be exchanged (transmitted and received) between the camera CPU and a lens CPU.

The interchangeable lens 100 further includes a zooming lens unit ZLU that is moved in zooming, a focusing lens unit FLU that is moved in focusing, and a shift lens unit SLU that is moved to stabilize images, in addition to the lens mount 101.. The interchangeable lens 100 further includes a lens unit LU, a diaphragm unit DU, and a neutral density (ND) filter NDF, in addition to the zooming lens unit ZLU, the focusing lens unit FLU, and the shift lens unit SLU. The number of lenses of each lens unit herein can be one or more than one.

The interchangeable lens 100 further includes a zoom driving unit that drives the zooming lens unit ZLU, a focus driving unit that drives the focusing lens unit FLU, and a diaphragm driving unit that drives the diaphragm unit DU. The interchangeable lens 100 further includes a ND driving unit that drives the ND filter NDF, and an anti-vibration driving unit that drives the shift lens unit SLU. The interchangeable lens 100 further includes the lens communication unit and the lens CPU that is a control unit for controlling the lens communication unit and the above-described driving units.

While the interchangeable lens 100 is a zoom lens that includes the zooming lens unit ZLU in Fig. 1, the interchangeable lens 100 can be a single focus lens that does not include the zooming lens unit ZLU. Further, the interchangeable lens 100 can be an interchangeable lens that does not include the shift lens unit SLU. The interchangeable lens 100 is configured to be attachable directly to the camera body 200 without an adaptor.

### (First Exemplary Embodiment)

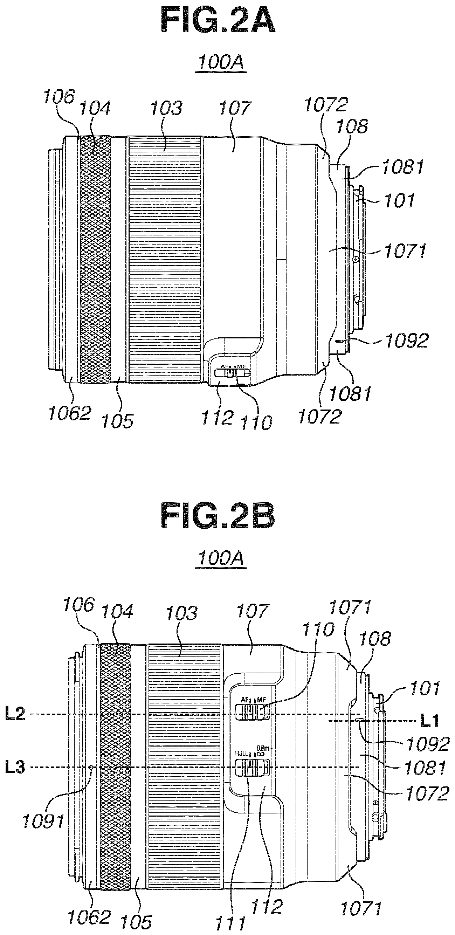

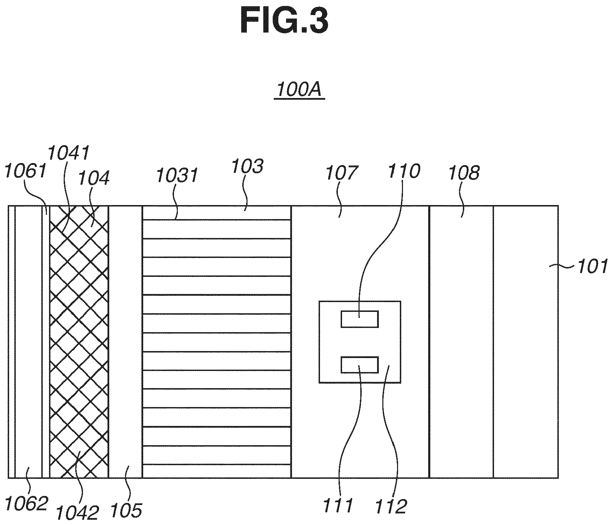

Next, an exterior of a first interchangeable lens 100A, which is an interchangeable lens 100 and is also an accessory according to a first exemplary embodiment of the present invention, will be described below with reference to Figs. 2, Fig. 3, and Figs. 4. Figs. 2 are diagrams illustrating an exterior of the first interchangeable lens 100A. Fig. 2A is an external view of the first interchangeable lens 100A viewed from a first direction perpendicular to an optical axis O. Fig. 2B is an external view of the first interchangeable lens 100A viewed from a second direction perpendicular to the optical axis O and different from the first direction. Fig. 3 is a schematic diagram illustrating an exterior of the first interchangeable lens 100A.

In Figs. 2, a focus operation ring (first operation member) 103 is a focus operation ring that moves the focusing lens unit FLU in a direction (optical axis direction) parallel to the optical axis O.

A custom operation ring (second operation member) 104 is a custom operation ring that realizes one of first and second functions different from the focusing. In other words, one of the first and second functions different from the focusing is assigned to the custom operation ring 104.

The display unit of the camera body 200 in Fig. 1 is a touch display and displays buttons corresponding to a plurality of functions that can be assigned to the custom operation ring 104. Then, the function corresponding to a button touched by a user among the buttons displayed on the display unit and corresponding to the plurality of functions is assigned to the custom operation ring 104. Specifically, the touch display of the camera body 200 is a display unit (display unit) and also a selection unit (selection unit). The selecting of a function to be assigned to the custom operation ring 104 is not limited to that described above. The interchangeable lens 100 can include a switch or touch display as a selection unit for selecting a function to be assigned to the custom operation ring 104. Alternatively, the camera body 200 can include a selection unit separately from the touch display.

The first and second functions to be assigned to the custom operation ring 104 are as follows. Specifically, the first and second functions are two of functions of adjusting (changing) parameters relating to image capturing conditions, such as an aperture value, white balance, shutter speed, International Organization for Standardization (ISO) sensitivity, and exposure value, and a function of switching between autofocusing and manual focusing. A third function and/or a fourth function can be assigned to the custom operation ring 104, in addition to the first and second functions.

### (Structure that realizes an accessory with two operation members that are easy to recognize)

As illustrated in Figs. 2 and 3, a surface of the focus operation ring 103 has a straight-shaped groove structure (first structure, longitudinal rib structure), and a surface of the custom operation ring 104 has a diamond-shaped groove structure (second structure, mesh-shaped groove structure). Specifically, the surface of the custom operation ring 104 includes a structure different from that of the surface of the focus operation ring 103. This realizes an accessory including two operation members that are easy to discriminate from each other. As used herein, the term "straight-shaped groove structure" refers to a structure that has a plurality of grooves 1031 parallel to an optical axis direction as illustrated in Fig. 3, or the term "straight-shaped groove structure" refers to a structure having undergone straight knurling processing. The term "diamond-shaped groove structure" refers to a structure that has a plurality of grooves 1041 intersecting with (tilted with respect to) the optical axis direction as illustrated in Fig. 3, or the term "diamond-shaped groove structure" refers to a structure having undergone diamond knurling processing.

### (Other Structures)

In the structure of the surface of the custom operation ring 104, a portion 1042 surrounded by four of the grooves 1041 has a rhombus-based pyramid shape. Thus, the surface of the custom operation ring 104 has a texture different from a texture of the surface of the focus operation ring 103, to make it easier to discriminate between the two operation members.

A material of the surface of the focus operation ring 103 is different from a material of the surface of the custom operation ring 104. The focus operation ring 103 and the custom operation ring 104 have a different texture in addition to a different surface structure as described above, making it easier for a user to discriminate between the two operation members.

More specifically, since the focus operation ring 103 includes a rubber ring, the material of the surface of the focus operation ring 103 is rubber. Since the custom operation ring 104 includes an injection-molded plastic ring-shaped member, the material of the surface of the custom operation ring 104 is less elastically deformable than the material of the surface of the focus operation ring 103. In other words, the material of the surface of the focus operation ring 103 is more elastically deformable than the material of the surface of the custom operation ring 104. This is because the focus operation ring 103, which is used more frequently than the custom operation ring 104, with a softer surface material than that of the custom operation ring 104 makes it easier to discriminate between the two operation members while an operation burden on a user is reduced.

As illustrated in Figs. 2 and 3, the width of the focus operation ring 103 in the optical axis direction is greater than the width of the custom operation ring 104 in the optical axis direction. The focus operation ring 103 and the custom operation ring 104 are also different in size, and this also makes it easier for a user to discriminate between the two operation members. The focus operation ring 103, which is used more frequently than the custom operation ring 104, has a greater size than that of the custom operation ring 104, which makes it easier to discriminate between the two operation members while operability is retained.

The custom operation ring 104 is arranged at a position closer to an object (subject side) than the focus operation ring 103. In other words, the focus operation ring 103 is arranged at a position closer to an image (image sensor side) than the custom operation ring 104. This arrangement relationship is employed since, due to the arrangement of the focus operation ring 103 at a position closer to a hand of a user, it makes easy to operate the focus operation ring 103.

An intermediate cylinder 105 is arranged between the focus operation ring 103 and the custom operation ring 104. The rotation of the intermediate cylinder 105 is regulated, and the intermediate cylinder 105 cannot be rotated about the optical axis O (in the optical axis direction). A case where, for example, the focus operation ring 103 and the custom operation ring 104 are arranged near each other without the intermediate cylinder 105 will be discussed below. In this case, there is a high possibility that fingers of a user touch both the focus operation ring 103 and the custom operation ring 104 to operate both of the operation rings at the same time. On the contrary, with the intermediate cylinder 105 as in the first interchangeable lens 100A, the possibility that both of the operation rings are operated at the same time decreases.

The intermediate cylinder 105 can be rotatable about the optical axis O, but it is desirable to regulate the rotation of the intermediate cylinder 105 similarly to the first interchangeable lens 100A. This is because if there is a member that is rotatable about the optical axis O besides the operation rings, a user may erroneously understand that the member is also an operation ring.

Desirably, a structure of a surface of the intermediate cylinder 105 is different from the structure of the surface of the focus operation ring 103 and from the structure of the surface of the custom operation ring 104. In the first interchangeable lens 100A, the surface of the intermediate cylinder 105 does not have a groove structure. Thus, the intermediate cylinder 105 exists as a kind of a boundary, and the presence of the intermediate cylinder 105 makes it clearer that the focus operation ring 103 and the custom operation ring 104 are separate operation rings.

As illustrated in Figs. 2 and 3, the width of the intermediate cylinder 105 in the optical axis direction is less than the width of the focus operation ring 103 in the optical axis direction and is less than the width of the custom operation ring 104 in the optical axis direction. With this configuration, the widths of the focus operation ring 103 and the custom operation ring 104 can be retained in the optical axis direction while the total length of the first interchangeable lens 100A in the optical axis direction is prevented from increasing.

A first annular member 1061 is arranged at a position closer to the object than the custom operation ring 104, and a second annular member 1062 is arranged at a position closer to the object than the first annular member. The first annular member 1061 and the second annular member 1062 can collectively be referred to as "annular member". The rotations of the first annular member 1061 and the second annular member 1062 about the optical axis O are also regulated.

The first annular member 1061 has a surface color different from a surface color of the second annular member 1062 and from a surface color of the custom operation ring 104. In the first interchangeable lens 100A, the surface color of the first annular member 1061 is red. The first annular member 1061 functions as a mark member indicating that an interchangeable lens including the first annular member 1061 is a specific interchangeable lens. Specifically, the first annular member 1061 functions as a mark member indicating an accessory type. In other words, the first annular member 1061 includes a type mark indicating an accessory type.

The second annular member 1062 includes a cap attachment mark (first attachment mark) 1091 for attaching a cap that protects a front surface of the first interchangeable lens 100A.

Desirably, at least the second annular member 1062 among the first annular member 1061 and the second annular member 1062 is made of a material other than metals. Specifically, at least the second annular member 1062 is desirably made of a plastic (resin). More desirably, both of the first annular member 1061 and the second annular member 1062 are made of a material other than metals. This is because the amount of static electricity that enters the first interchangeable lens 100A through edges is reduced.

A second exterior member (second exterior unit) 108 is exposed at least partially from a first exterior member (first exterior unit) 107. The second exterior member 108 includes a lens attachment mark (second mark) 1092 for attaching the first interchangeable lens 100A to the camera body 200. A plurality of bayonet nail portions of the lens mount 101 is inserted into notch portions between a plurality of bayonet nail portions of the camera mount 201 with ease by matching phases of the lens attachment mark 1092 and a mark on the camera body 200.

Even when the first interchangeable lens 100A is attached to the camera body 200, the second exterior member 108 is still partially exposed from the first exterior member 107. Further, the second exterior member 108 has a surface color different from a surface color of the first exterior member 107, and in the first interchangeable lens 100A, the surface of the second exterior member 108 is silver-colored (metal surface color), and the surface color of the first exterior member 107 is black.

As illustrated in Figs. 2A and 2B, an image-side end portion of the first exterior member 107 includes a first wall portion 1071 and a second wall portion 1072. The second wall portion 1072 is more depressed than the first wall portion 1071.
Specifically, an end surface of the first wall portion 1071 is more projected toward the image side than an end surface of the second wall portion 1072. It can also be considered that the image-side end portion of the first exterior member 107 is partially notched. In this case, a wall portion having the same phase and the same width in a circumferential direction as those of the notched portion is the second wall portion 1072, and the remaining unnotched portion is the first wall portion 1071.

The first exterior member 107 includes the first wall portion 1071 and the second wall portion 1072, and therefore the shape of the portion of the second exterior member 108 that is exposed from the first exterior member 107 differs depending on the direction from which the first interchangeable lens 100A is viewed.

Specifically, the shape of the surface of the second exterior member 108 that is exposed from the first exterior member 107 when viewed from the first direction perpendicular to the optical axis direction in Fig. 2A will be referred to as "first exposure shape". Further, the shape of the surface of the second exterior member 108 that is exposed from the first exterior member 107 when viewed from the second direction perpendicular to the optical axis direction and different from the first direction in Fig. 2B will be referred to as "second exposure shape". At this time, it can be said that the first exterior member 107 has a shape in which the first exposure shape and the second exposure shape are different from each other. This makes it easier to determine an orientation of the first interchangeable lens 100A in the circumferential direction.

For example, in a case where the first interchangeable lens 100A attached to the camera body 200 is in a normal state when viewed from a side surface, whether the first interchangeable lens 100A is in the normal state is determined with ease based on a difference of the exposure shape of the second exterior member 108. More specifically, the first interchangeable lens 100A attached to the camera body 200 is as illustrated in Fig. 2B when viewed from the side surface. Specifically, in a case where the first interchangeable lens 100A is as illustrated in Fig. 2B when viewed from the side surface, it is determined that the first interchangeable lens 100A is in the normal state. As used herein, the term "normal state" refers to a state where the shutter button of the camera body 200 faces upward and a state of the interchangeable lens 100 attached to the camera body 200 in that state.

As illustrated in Fig. 2B, a predetermined line L1 parallel to the optical axis O when viewed from the second direction passes through a portion of the lens attachment mark 1092 and a portion of the second wall portion 1072. In other words, the line L1 passes through the portion of the lens attachment mark 1092 and a portion of a depressed portion between the first wall portions 1071. That is to say, a portion 1081 of the surface of the second exterior member 108 that is exposed from the first exterior member 107 when viewed from the second direction and is wider than the other portions in the optical axis direction includes the lens attachment mark 1092. This makes the lens attachment mark 1092 larger and more noticeable. In the first interchangeable lens 100A, the shape of the lens attachment mark 1092 has a greater width in the optical axis direction.

A portion of the first exterior member 107 is a switch base portion 112 that holds switches 110 and 111. The focus mode setting switch (focus mode selection unit) 110 is for switching between an autofocus mode and a manual focus mode. The image capturing distance range setting switch 111 is for switching an image capturing distance range.

The focus mode setting switch 110 and the image capturing distance range setting switch 111 are arranged at positions closer to the image than the focus operation ring 103. Specifically, the focus operation ring 103 is arranged between the custom operation ring 104 and the focus mode setting switch 110 and the image capturing distance range setting switch 111.

As illustrated in Fig. 2B, a line L2 being parallel to the optical axis O and passing through a portion of the focus mode setting switch 110 passes through a portion of the second wall portion 1072 when viewed from the second direction. Further, a line L3 being parallel to the optical axis O and passing through a portion of the image capturing distance range setting switch 111 passes through a portion of the second wall portion 1072. Specifically, phases of the second wall portion 1072 and the focus mode setting switches 110 and 111 substantially correspond. A case where, for example, it is difficult to view the focus mode setting switch 110 and the image capturing distance range setting switch 111, e.g., a case where image capturing is performed at night, will be discussed below. In this case, the focus mode setting switch 110 and the image capturing distance range setting switch 111 can be operated with ease by a left hand by, for example, bringing the thumb of the left hand into contact with the depressed portion between the first wall portions 1071 and moving the left hand to the front. The interchangeable lens 100 is structured so that a predetermined line parallel to the optical axis O passes through a portion of the switch base portion 112 and a portion of the second wall portion 1072 (a portion of the depressed portion between the first wall portions 1071) when viewed from the second direction.

As illustrated in Fig. 1, the interchangeable lens 100 includes a click mechanism (click feeling producing mechanism). The click mechanism produces a click feeling when the custom operation ring 104 is operated. Specifically, when the focus operation ring 103 of the first interchangeable lens 100A is operated, no click feelings are produced, whereas when the custom operation ring 104 is operated, the click mechanism produces a click feeling. Thus, the two operation rings can be discriminated also based on a difference in operation feelings. The click mechanism includes, for example, a plurality of groove portions on an inner periphery of the custom operation ring 104, an elastic member, and a pin member biased against the groove portions by the elastic member.

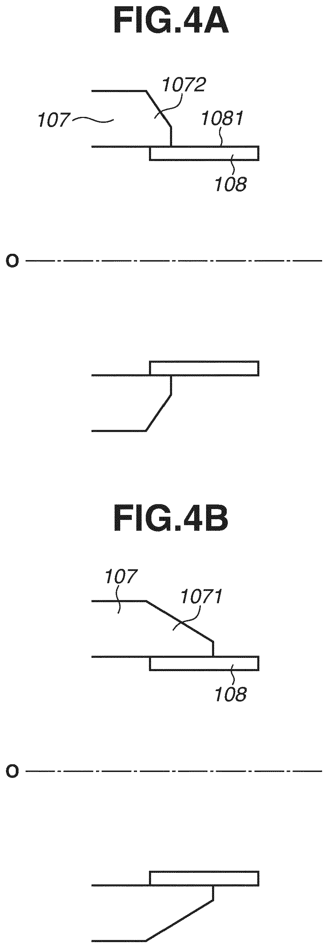

The first wall portion 1071 and the second wall portion 1072 will be described in more detail below with reference to Figs. 4. Figs. 4 are diagrams schematically illustrating a cross section of the image-side end portion of the first exterior member 107 and the second exterior member 108. Fig. 4A is a schematic partial cross-sectional view illustrating the first interchangeable lens 100A cut along a cross section (first cross section) that is parallel to the sheet and passes through the optical axis O in Fig. 2A. Fig. 4B is a schematic partial cross-sectional view illustrating the first interchangeable lens 100A cut along a cross section (second cross section) that is parallel to the sheet and passes through the optical axis O in Fig. 2B.

As illustrated in Fig. 4A, the second wall portion 1072 covers a portion (near an object-side end portion) of the second exterior member 108. As illustrated in Fig. 4B, the first wall portion 1071 also covers a portion (near the object-side end portion) of the second exterior member 108. Further, as illustrated in Figs. 4A and B, the area of the surface of the second exterior member 108 that is covered by the first wall portion 1071 is larger than the area of the surface of the second exterior member 108 that is covered by the second wall portion 1072.

### (Second Exemplary Embodiment)

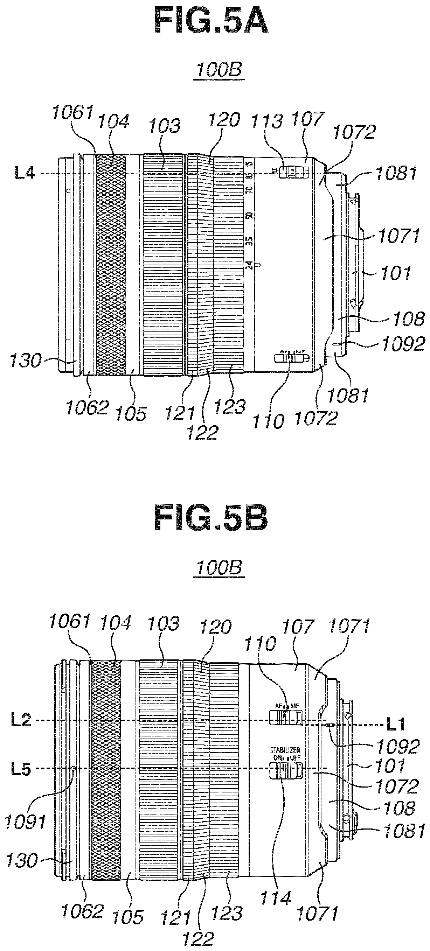

Next, an exterior of the second interchangeable lens 100B, which is an interchangeable lens 100 and is also an accessory according to a second exemplary embodiment of the present invention, will be described below with reference to Figs. 5. Figs. 5 are diagrams illustrating an exterior of the second interchangeable lens 100B. Fig. 5A is an external view illustrating the second interchangeable lens 100B viewed from the first direction perpendicular to the optical axis O. Fig. 5B is an external view illustrating the second interchangeable lens 100B viewed from the second direction perpendicular to the optical axis O and different from the first direction. Each component having a similar function to that in the first interchangeable lens 100A is given the same reference numeral, and redundant descriptions thereof are omitted.

In the second interchangeable lens 100B, similarly, the surface of the focus operation ring 103 has a straight-shaped groove structure (first structure), and the surface of the custom operation ring 104 has a diamond-shaped groove structure (second structure). Thus, the present exemplary embodiment also realizes an accessory that is easy to discriminate between the two operation members.

A zoom operation ring (third operation member) 120 is for moving the zoom lens unit ZLU in Fig. 1 in the optical axis direction. The zoom operation ring 120 is arranged at a position closer to the image than the focus operation ring 103. Specifically, the custom operation ring 104, the focus operation ring 103, and the zoom operation ring 120 are arranged in this order from the object side.

Further, as illustrated in Figs. 5, a surface of the zoom operation ring 120 has a straight-shaped groove structure similarly to the surface of the focus operation ring 103. The focus operation ring 103 and the zoom operation ring 120, however, have a different outer periphery shape. More specifically, the zoom operation ring 120 includes a large-diameter portion 121, a small-diameter portion 123 smaller in diameter than the large-diameter portion 121, and a connecting portion 122 between the large-diameter portion 121 and the small-diameter portion 123. A surface of each of the large-diameter portion 121, the connecting portion 122, and the small-diameter portion 123 has a straight-shaped groove structure. Thus, three operation rings in total that are the custom operation ring 104, the focus operation ring 103, and the zoom operation ring 120 are easy to discriminate in the second interchangeable lens 100B.

In the second interchangeable lens 100B, when the zoom operation ring 120 is operated, a lens holding frame 130 is moved in the optical axis direction. A lock switch 113 locks operations of the zoom operation ring 120 to prevent the lens holding frame 130 from being moved in the optical axis direction by the weight of the lens holding frame 130 when not in use. As illustrated in Fig. 5A, a line L4 passing through a portion of the lock switch 113 and being parallel to the optical axis O passes through a portion of the second wall portion 1072 (a portion of the depressed portion between the first wall portions 1071). Therefore, the lock switch 113 is also easy to find similarly to the focus mode setting switch 110 and the image capturing distance range setting switch 111.

An image stabilization (IS) selection switch 114 is for switching an image stabilization function on and off. As illustrated in Fig. 5B, a line L5 passing through a portion of the IS selection switch 114 and being parallel to the optical axis O passes through a portion of the second wall portion 1072 (a portion of the depressed portion between the first wall portions 1071). Thus, the IS selection switch 114 is also easy to find similarly to the switches 110 and 111.

In the second interchangeable lens 100B, not the second annular member 1062 but the lens holding frame 130 includes the cap attachment mark 1091.

Further, in the second interchangeable lens 100B, the focus mode setting switch 110, the lock switch 113, and the IS selection switch 114 are arranged at a position closer to the image than the zoom operation ring 120. A material of a surface of the zoom operation ring 120 is a rubber similarly to the material of the surface of the focus operation ring 103.

### (Third Exemplary Embodiment)

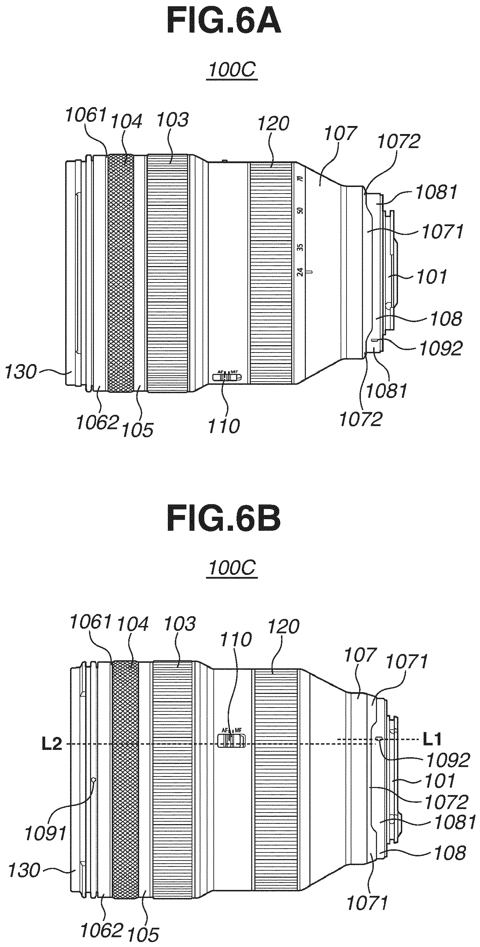

Next, an exterior of a third interchangeable lens 100C, which is an interchangeable lens 100 and is also an accessory according to a third exemplary embodiment of the present invention, will be described below with reference to Figs. 6. Figs. 6 are diagrams illustrating an exterior of the third interchangeable lens 100C. Fig. 6A is an external view illustrating the third interchangeable lens 100C viewed from the first direction perpendicular to the optical axis O. Fig. 6B is an external view illustrating the second interchangeable lens 100C viewed from the second direction perpendicular to the optical axis O and different from the first direction. Each component having a similar function to that in the first interchangeable lens 100A or the second interchangeable lens 100B is given the same reference numeral as that in Figs. 2 or Figs. 5, and redundant descriptions thereof are omitted.

In the third interchangeable lens 100C, similarly, the surface of the focus operation ring 103 has a straight-shaped groove structure (first structure), and the surface of the custom operation ring 104 has a diamond-shaped groove structure (second structure). Thus, the present exemplary embodiment also realizes an accessory with two operation members that are easy to discriminate.

Similarly to the second interchangeable lens 100B, the third interchangeable lens 100C includes the zoom operation ring 120. The position of the zoom operation ring 120 in the optical axis direction in the third interchangeable lens 100C, however, is different from the second interchangeable lens 100B. Specifically, in the third interchangeable lens 100C, the zoom operation ring 120 is arranged at a position closer to the image than the focus mode setting switch 110. In other words, the focus mode setting switch 110 is arranged between the focus operation ring 103 and the zoom operation ring 120 in the third interchangeable lens 100C.

With the above-described structure, even in a case where the focus operation ring 103 and the zoom operation ring 120 are similar in shape as in the third interchangeable lens 100C, the focus operation ring 103 and the zoom operation ring 120 are easy to discriminate with the focus mode setting switch 110 being a boundary. Further, as described above, the surface of the custom operation ring 104 has a diamond-shaped groove structure different from the other operation rings. Specifically, in the third interchangeable lens 100C, three operation rings in total that are the custom operation ring 104, the focus operation ring 103, and the zoom operation ring 120 are easy to discriminate. Further, the diameter of the zoom operation ring 120 is greater than the diameter of the custom operation ring 104 in the third interchangeable lens 100C. This makes it easier to discriminate between the custom operation ring 104 and the zoom operation ring 120.

### (Fourth Exemplary Embodiment)

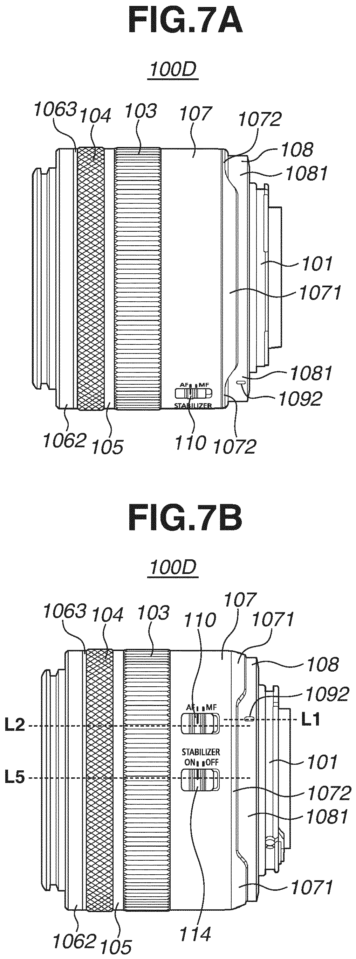

Next, an exterior of a fourth interchangeable lens 100D, which is an interchangeable lens 100 and is also an accessory according to a fourth exemplary embodiment of the present invention, will be described below with reference to Figs. 7. Figs. 7 are diagrams illustrating an exterior of the fourth interchangeable lens 100D. Fig. 7A is an external view illustrating the fourth interchangeable lens 100D viewed from the first direction perpendicular to the optical axis O. Fig. 7B is an external view illustrating the fourth interchangeable lens 100D viewed from the second direction perpendicular to the optical axis O and different from the first direction. Each component having a similar function to that in the above-described interchangeable lenses is given the same reference numeral as in Figs. 2 or Figs. 5, and redundant descriptions thereof are omitted.

The fourth interchangeable lens 100D is different from the first, second, and third interchangeable lenses in that the fourth interchangeable lens 100D includes a third annular member 1063 in place of the first annular member 1061. Further, the fourth interchangeable lens 100D does not include the cap attachment mark 1091. While the first annular member 1061 has a red surface, the third annular member 1063 has a color different from red, such as black or gray.

In the fourth interchangeable lens 100D, similarly, the surface of the focus operation ring 103 has a straight-shaped groove structure (first structure), and the surface of the custom operation ring 104 has a diamond-shaped groove structure (second structure). Thus, the present exemplary embodiment also realizes an accessory with two operation members that are easy to discriminate.

### (Fifth Exemplary Embodiment)

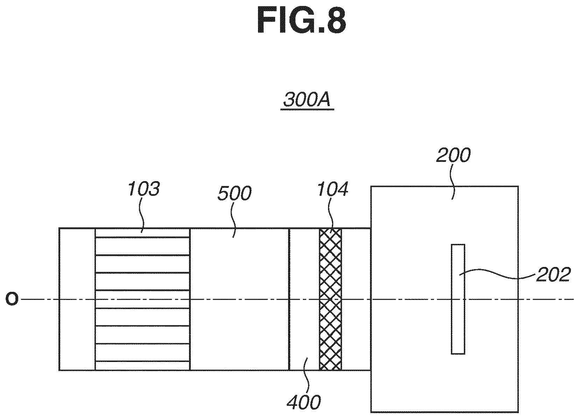

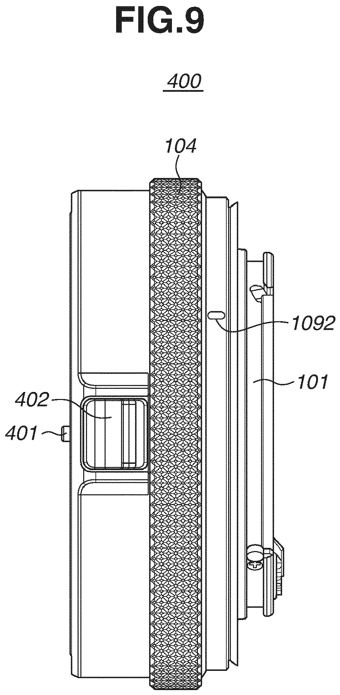

Next, an adaptor (accessory) 400, which is an accessory according to a fifth exemplary embodiment of the present invention, will be described below with reference to Figs. 8 and 9. Fig. 8 is a schematic view illustrating the camera system 300A including the adaptor 400, and Fig. 9 is an external view illustrating the adaptor 400.

Each of the interchangeable lenses 100A to 100D is directly attachable to the camera body 200 without an adaptor. The adaptor 400 according to the present exemplary embodiment is also directly attachable to the camera body 200. The adaptor 400 is an adaptor for using an interchangeable lens 500 that cannot be attached directly to the camera body 200 in combination with the camera body 200 as illustrated in Fig. 8.

As illustrated in Fig. 9, the adaptor 400 includes the custom operation ring 104, the lens attachment mark 1092, and the lens mount 101. Further, the adaptor 400 includes a lock pin 401 and a pin operation portion 402. The lock pin 401 is to be inserted into a depressed portion of the lens mount portion of the interchangeable lens 500. The pin operation portion 402 moves the lock pin 401 forward and backward in the optical axis direction.

As illustrated in Fig. 8, the interchangeable lens 500 includes the focus operation ring 103 having a straight-shaped groove structure. Further, as illustrated in Figs. 8 and 9, the adaptor 400 includes the custom operation ring 104 having a diamond-shaped groove structure. Thus, in a case where image capturing is performed using the interchangeable lens 500, the adaptor 400, and the camera body 200, the focus operation ring 103 of the interchangeable lens 500 and the custom operation ring 104 of the adaptor 400 are discriminated with ease.

### (Modified Example)

While various exemplary embodiments of the present invention have been described above, it is apparent that the present invention is not limited to the exemplary embodiments, and various modifications and changes are possible within the scope of the appended claims.

The interchangeable lenses according to the first, second, and third exemplary embodiments include the second annular member 1062 and the first annular member 1061, which is a mark member that indicates the type of the interchangeable lens. Alternatively, for example, a portion of the second annular member 1062 that is painted all around the second annular member 1062 can be used as a mark indicating the type of the interchangeable lens in place of first annular member 101.

Further, the interchangeable lenses (accessories) according to the first, second, third, and fourth exemplary embodiments include the first exterior member 107 and the second exterior member 108 that are different members and have different surface colors from each other. The present invention, however, is not limited to this structure. For example, a single exterior member that is a combination of the exterior members of the first exterior member 107 and the second exterior member 108 can be used in place of the first exterior member 107 and the second exterior member 108. A first region of a surface of one of the exterior members can have a different color from a color of a second region different from the first region. In other words, the color of the first region of the surface of the exterior members of the interchangeable lenses (accessories) according to the first, second, third, and fourth exemplary embodiments is different from the color of the second region different from the first region. In the interchangeable lenses according to the first, second, third, and fourth exemplary embodiments, the first region corresponds to a region of the surface of the first exterior member 107, and the second region corresponds to a region of the surface of the second exterior member 108.

Further, in the interchangeable lenses (accessories) according to the first, second, third, and fourth exemplary embodiments, the custom operation ring 104 is arranged at a position closer to the object than the focus operation ring 103. The present invention, however, is not limited to this structure. The custom operation ring 104 can be arranged at a position closer to the image than the focus operation ring 103. Further, the custom operation ring 104 can be arranged at a position closer to the image than the zoom operation ring 120.

The present invention is not limited to the above-described exemplary embodiments, and various changes and modifications are possible without departing from the scope of the present invention. The following claims are attached to disclose the scope of the present invention.

## Claims

1. An accessory comprising:
a focusing lens unit (FLU) that is to be moved in an optical axis direction for focusing;
a first operation member (103) that is operated to move the focusing lens unit (FLU) in the optical axis direction; and
a second operation member (104) that is operable with respect to one of a function selectively assigned among a plurality of functions different from the focusing,
**characterized in that**
a width of the first operation member (103) in the optical axis direction is greater than a width of the second operation member (104) in the optical axis direction,
a surface of the first operation member (103) has a straight-shaped groove structure, and a surface of the second operation member (104) has a mesh-shaped groove structure, and **in that**
a material of the surface of the first operation member (103) is more elastically deformable than a material of the surface of the second operation member (104).

2. The accessory according to Claim 1, further comprising:
a zoom lens unit (ZLU) that is to be moved in the optical axis direction for zooming; and
a third operation member (120) that move the zoom lens unit (ZLU) in the optical axis direction,
wherein the second operation member (104), the first operation member (103), and the third operation member (120) are arranged in this order from an object side.

3. The accessory according to Claim 1, further comprising:
a zoom lens unit (ZLU) that is to be moved in the optical axis direction for zooming; and
a third operation member (120) that moves the zoom lens unit (ZLU) in the optical axis direction,
wherein a surface of the third operation member (120) has a straight-shaped groove structure, and
wherein a width of the first operation member (103) in the optical axis direction is greater than a width of the second operation member (104) in the optical axis direction, and a width of the third operation member (120) in the optical axis direction is greater than the width of the first operation member (103) in the optical axis direction.

4. The accessory according to Claim 2 or 3, wherein the third operation member (120) includes a large-diameter portion, a small-diameter portion smaller in diameter than the large-diameter portion, and a connecting portion between the large-diameter portion and the small-diameter portion.

5. The accessory according to Claim 4, further comprising a focus mode selection unit (110) configured to switch between an autofocus mode and a manual focus mode,
wherein the focus mode selection unit (110) is arranged at a position closer to an image than the small-diameter portion of the third operation member (120).

6. The accessory according to Claim 2 or 3, further comprising a focus mode selection unit (110) configured to switch between an autofocus mode and a manual focus mode,
wherein the focus mode selection unit (110) is arranged between the first operation member (103) and the third operation member (120).

7. The accessory according to any one of Claims 1 to 6, further comprising a first annular member (1061) and a second annular member (1062) wherein the first annular member (1061) is arranged at a position closer to the object than the second operation member (104) and the second annular member (1062) is arranged at a position closer to the object than the first annular member (1061).

8. The accessory according to Claim 7, wherein the first annular member (1061) includes a type mark indicating a type of the accessory.

9. The accessory according to Claim 7 or 8, wherein the second annular member (1062) is made of a resin.

10. The accessory according to any one of Claims 1 to 4, further comprising a focus mode selection unit (110) configured to switch between an autofocus mode and a manual focus mode,
wherein the first operation member (103) is arranged between the second operation member (104) and the focus mode selection unit (110).

11. The accessory according to any one of Claims 1 to 10, wherein the second operation member (104) is arranged at a position closer to the object than the first operation member (103).

12. The accessory according to any one of Claims 1 to 11, further comprising:
a first exterior member (107); and
a second exterior member (108) exposed at least partially from the first exterior member (107) and having a surface color different from a surface color of the first exterior member (107).

13. The accessory according to Claim 12, wherein the first exterior member (107) has a shape by which a shape of a surface of the second exterior member (108) that is exposed from the first exterior member (107) when viewed from a first direction perpendicular to the optical axis direction is different from a shape of a surface of the second exterior member (108) that is exposed from the first exterior member (107) when viewed from a second direction perpendicular to the optical axis direction and different from the first direction.

14. The accessory according to Claim 13,
wherein the first exterior member (107) includes a first wall portion (1071) and a second wall portion (1072) each covering a portion of the second exterior member (108), and an image-side end surface of the first wall portion (1071) in the optical axis direction is different in position from an image-side end surface of the second wall portion (1072) in the optical axis direction, and
wherein when viewed from the first and second directions, the image-side end surface of the first wall portion (1071) is arranged at a position closer to the image than the image-side end surface of the image side of the second wall portion (1072).

15. The accessory according to Claim 14, further comprising a focus mode selection unit (110) configured to switch between an autofocus mode and a manual focus mode,
wherein when viewed from the second direction, the focus mode selection unit (110) is arranged so that a predetermined line extending in a direction parallel to the optical axis direction passes through the focus mode selection unit (110) and the second wall portion (1072).

16. The accessory according to Claim 14 or 15,
wherein the second exterior member (108) includes an attachment mark (1092), and
wherein when viewed from the second direction, the attachment mark (1092) is arranged so that a predetermined line extending in a direction parallel to the optical axis direction passes through the attachment mark (1092) and the second wall portion (1072).

17. The accessory according to any one of Claims 1 to 16, further comprising an intermediate cylinder (105) between the second operation member (104) and the first operation member (103).

18. The accessory according to Claim 17, wherein a rotation of the intermediate cylinder (105) about the optical axis direction is regulated.

19. The accessory according to Claim 17 or 18, wherein a width of the intermediate cylinder (105) in the optical axis direction is less than a width of the second operation member (104) in the optical axis direction and a width of the first operation member (103) in the optical axis direction.

20. The accessory according to any one of Claims 1 to 18, further comprising a click feeling producing mechanism that produces a click feeling when the second operation member (104) is operated.

21. The accessory according to Claim 20,
wherein the click feeling is not produced when the first operation member (103) is operated, and
wherein the click feeling producing mechanism produces the click feeling when the second operation member (104) is operated.

22. The accessory according to any one of Claims 1 to 21, wherein the accessory is an interchangeable lens attachable to and detachable from a camera body (200).

23. The accessory according to any one of Claims 1 to 22,
wherein the accessory is attachable to and detachable from a camera body (200) including an image sensor and a selection unit, and
wherein the one of a function is a function that is selected by the selection unit from the plurality of functions.

24. The accessory according to any one of Claims 1 to 23, wherein the plurality of functions include an aperture value adjustment function, a shutter speed adjustment function, an International Organization for Standardization (ISO) sensitivity adjustment function, and an exposure value adjustment function.

25. The accessory according to any one of Claims 1 to 24, wherein a surface texture of the second operation member (104) is different from a surface texture of the first operation member (103).

26. A camera system comprising:
the accessory according to any one of Claims 1 to 25; and
a camera body (200) that includes an image sensor.

27. A lens apparatus and an accessory that is attachable between a camera body (200) including an image sensor and the lens apparatus,
wherein the lens apparatus is not attachable directly to the camera body (200) and includes a focusing lens unit (FLU) configured to be moved in an optical axis direction for focusing and a first operation member (103) configured to move the focusing lens unit (FLU) in the optical axis direction,
the accessory comprising a second operation member (104) that is operable with respect to one of a function selectively assigned among a plurality of functions that differ from the focusing,
**characterized in that**
a width of the first operation member (103) in the optical axis direction is greater than a width of the second operation member (104) in the optical axis direction,
a surface of the first operation member (103) has a straight-shaped groove structure, and a surface of the second operation member (104) has a mesh-shaped groove structure, and **in that**
a material of the surface of the first operation member (103) is more elastically deformable than a material of the surface of the second operation member (104).

28. The lens apparatus and the accessory according to Claim 27, wherein the surface of the second structure has a diamond-shaped groove structure.

## Patentansprüche

1. Zubehör, das aufweist:
eine Fokussierlinseneinheit (FLU), die zum Fokussieren in einer Optikachsenrichtung zu bewegen ist;
ein erstes Betätigungselement (103), das zum Bewegen der Fokussierlinseneinheit (FLU) in der Optikachsenrichtung betätigt wird; und
ein zweites Betätigungselement (104), das bezüglich einer einer Funktion betätigbar ist, die aus einer Vielzahl Funktionen auswählbar zugeordnet ist, die sich von dem Fokussieren unterscheiden,
**dadurch gekennzeichnet, dass**
eine Breite des ersten Betätigungselements (103) in der Optikachsenrichtung größer ist als eine Breite des zweiten Betätigungselements (104) in der Optikachsenrichtung,
eine Oberfläche des ersten Betätigungselements (103) eine geradeförmige Nutstruktur hat und eine Oberfläche des zweiten Betätigungselements (104) eine netzförmige Nutstruktur hat, und dadurch, dass
ein Material der Oberfläche des ersten Betätigungselements (103) elastisch verformbarer ist als ein Material der Oberfläche des zweiten Betätigungselements (104).

2. Zubehör gemäß Anspruch 1, das ferner aufweist:
eine Zoomlinseneinheit (ZLU), die zum Zoomen in der Optikachsenrichtung zu bewegen ist; und
ein drittes Betätigungselement (120), das die Zoomlinseneinheit (ZLU) in der Optikachsenrichtung bewegt,
wobei das zweite Betätigungselement (104), das erste Betätigungselement (103) und das dritte Betätigungselement (120) in dieser Reihenfolge von einer Objektseite angeordnet sind.

3. Zubehör gemäß Anspruch 1, das ferner aufweist:
eine Zoomlinseneinheit (ZLU), die zum Zoomen in der Optikachsenrichtung zu bewegen ist; und
ein drittes Betätigungselement (120), das die Zoomlinseneinheit (ZLU) in der Optikachsenrichtung bewegt,
wobei eine Oberfläche des dritten Betätigungselements (120) eine geradeförmige Nutstruktur hat, und
wobei eine Breite des ersten Betätigungselements (103) in der Optikachsenrichtung größer ist als eine Breite des zweiten Betätigungselements (104) in der Optikachsenrichtung und eine Breite des dritten Betätigungselements (120) in der Optikachsenrichtung größer ist als die Breite des ersten Betätigungselements (103) in der Optikachsenrichtung.

4. Zubehör gemäß Anspruch 2 oder 3, wobei das dritte Betätigungselement (120) einen Abschnitt mit großem Durchmesser, einen Abschnitt mit kleinem Durchmesser, der einen kleineren Durchmesser hat als der Abschnitt mit großem Durchmesser, und einen Verbindungsabschnitt zwischen dem Abschnitt mit großem Durchmesser und dem Abschnitt mit kleinem Durchmesser umfasst.

5. Zubehör gemäß Anspruch 4, das ferner eine Fokusmodusauswähleinheit (110) aufweist, die dazu gestaltet ist, zwischen einem Autofokusmodus und einem Manuellfokusmodus umzuschalten,
wobei die Fokusmodusauswähleinheit (110) an einer Position angeordnet ist, die näher bei einem Bild ist als der Abschnitt mit kleinem Durchmesser des dritten Betätigungselements (120).

6. Zubehör gemäß Anspruch 2 oder 3, das ferner eine Fokusmodusauswähleinheit (110) aufweist, die dazu gestaltet ist, zwischen einem Autofokusmodus und einem Manuellfokusmodus umzuschalten,
wobei die Fokusmodusauswähleinheit (110) zwischen dem ersten Betätigungselement (103) und dem dritten Betätigungselement (120) angeordnet ist.

7. Zubehör gemäß einem der Ansprüche 1 bis 6, das ferner ein erstes ringförmiges Element (1061) und ein zweites ringförmiges Element (1062) aufweist, wobei das erste ringförmige Element (1061) an einer Position angeordnet ist, die näher bei dem Objekt ist als das zweite Betätigungselement (104), und das zweite ringförmige Element (1062) an einer Position angeordnet ist, die näher bei dem Objekt ist als das erste ringförmige Element (1061).

8. Zubehör gemäß Anspruch 7, wobei das erste ringförmige Element (1061) eine Ausführungsmarkierung umfasst, die eine Ausführung des Zubehörs angibt.

9. Zubehör gemäß Anspruch 7 oder 8, wobei das zweite ringförmige Element (1062) aus einem Harz gefertigt ist.

10. Zubehör gemäß einem der Ansprüche 1 bis 4, das ferner eine Fokusmodusauswähleinheit (110) aufweist, die dazu gestaltet ist, zwischen einem Autofokusmodus und einem Manuellfokusmodus umzuschalten,
wobei das erste Betätigungselement (103) zwischen dem zweiten Betätigungselement (104) und der Fokusmodusauswähleinheit (110) angeordnet ist.

11. Zubehör gemäß einem der Ansprüche 1 bis 10, wobei das zweite Betätigungselement (104) an einer Position angeordnet ist, die näher bei dem Objekt ist als das erste Betätigungselement (103).

12. Zubehör gemäß einem der Ansprüche 1 bis 11, das ferner aufweist:
ein erstes Außenelement (107); und
ein zweites Außenelement (108), das zumindest teilweise von dem ersten Außenelement (107) freigestellt ist und eine Oberflächenfarbe hat, die sich von einer Oberflächenfarbe des ersten Außenelements (107) unterscheidet.

13. Zubehör gemäß Anspruch 12, wobei das erste Außenelement (107) eine Form hat, durch die sich eine Form einer Oberfläche des zweiten Außenelements (108), das von dem ersten Außenelement (107) freigestellt ist, wenn von einer ersten Richtung betrachtet, die zu der Optikachsenrichtung senkrecht ist, von einer Form einer Oberfläche des zweiten Außenelements (108) unterscheidet, das von dem ersten Außenelement (107) freigestellt ist, wenn von einer zweiten Richtung betrachtet, die zu der Optikachsenrichtung senkrecht ist und sich von der ersten Richtung unterscheidet.

14. Zubehör gemäß Anspruch 13,
wobei das erste Außenelement (107) einen ersten Wandabschnitt (1071) und einen zweiten Wandabschnitt (1072) umfasst, die jeweils einen Abschnitt des zweiten Außenelements (108) abdecken, und eine bildseitige Endfläche des ersten Wandabschnitts (1071) in der Optikachsenrichtung eine sich von einer bildseitigen Endfläche des zweiten Wandabschnitts (1072) unterscheidende Position in der Optikachsenrichtung hat, und
wobei, wenn von den ersten und zweiten Richtungen betrachtet, die bildseitige Endfläche des ersten Wandabschnitts (1071) an einer Position angeordnet ist, die näher bei dem Bild ist als die bildseitige Endfläche der Bildseite des zweiten Wandabschnitts (1072).

15. Zubehör gemäß Anspruch 14, das ferner eine Fokusmodusauswähleinheit (110) aufweist, die dazu gestaltet ist, zwischen einem Autofokusmodus und einem Manuellfokusmodus umzuschalten,
wobei, wenn von der zweiten Richtung betrachtet, die Fokusmodusauswähleinheit (110) so angeordnet ist, dass eine vorbestimmte Linie, die sich in einer Richtung parallel zu der Optikachsenrichtung erstreckt, durch die Fokusmodusauswähleinheit (110) und den zweiten Wandabschnitt (1072) tritt.

16. Zubehör gemäß Anspruch 14 oder 15,
wobei das zweite Außenelement (108) eine Anbringungsmarkierung (1092) umfasst, und
wobei, wenn von der zweiten Richtung betrachtet, die Anbringungsmarkierung (1092) so angeordnet ist, dass eine vorbestimmte Linie, die sich in einer Richtung parallel zu der Optikachsenrichtung erstreckt, durch die Anbringungsmarkierung (1092) und den zweiten Wandabschnitt (1072) tritt.

17. Zubehör gemäß einem der Ansprüche 1 bis 16, das ferner einen Zwischenzylinder (105) zwischen dem zweiten Betätigungselement (104) und dem ersten Betätigungselement (103) aufweist.

18. Zubehör gemäß Anspruch 17, wobei eine Drehung des Zwischenzylinders (105) um die Optikachsenrichtung reguliert ist.

19. Zubehör gemäß Anspruch 17 oder 18, wobei eine Breite des Zwischenzylinders (105) in der Optikachsenrichtung kleiner ist als eine Breite des zweiten Betätigungselements (104) in der Optikachsenrichtung und eine Breite des ersten Betätigungselements (103) in der Optikachsenrichtung.

20. Zubehör gemäß einem der Ansprüche 1 bis 18, das ferner einen Klickgefühlerzeugungsmechanismus aufweist, der ein Klickgefühl erzeugt, wenn das zweite Betätigungselement (104) betätigt wird.

21. Zubehör gemäß Anspruch 20,
wobei das Klickgefühl nicht erzeugt wird, wenn das erste Betätigungselement (103) betätigt wird, und
wobei der Klickgefühlerzeugungsmechanismus das Klickgefühl erzeugt, wenn das zweite Betätigungselement (104) betätigt wird.

22. Zubehör gemäß einem der Ansprüche 1 bis 21, wobei das Zubehör eine auswechselbare Linse ist, die an einem Kamerakörper (200) anbringbar und von diesem abnehmbar ist.

23. Zubehör gemäß einem der Ansprüche 1 bis 22,
wobei das Zubehör an einem Kamerakörper (200) anbringbar ist, der einen Bildsensor und eine Auswähleinheit umfasst, und von diesem abnehmbar ist, und
wobei die eine einer Funktion eine Funktion ist, die durch die Auswähleinheit aus der Vielzahl Funktionen ausgewählt wird.

24. Zubehör gemäß einem der Ansprüche 1 bis 23, wobei die Vielzahl Funktionen eine Blendenwertanpassungsfunktion, eine Verschlussgeschwindigkeitsanpassungsfunktion, eine International-Organization-for-Standardization-(ISO)-Empfindlichkeitsanpassungsfunktion und eine Belichtungswertanpassungsfunktion umfassen.

25. Zubehör gemäß einem der Ansprüche 1 bis 24, wobei eine Oberflächentextur des zweiten Betätigungselements (104) von einer Oberflächentextur des ersten Betätigungselements (103) verschieden ist.

26. Kamerasystem, das aufweist:
das Zubehör gemäß einem der Ansprüche 1 bis 25; und
einen Kamerakörper (200), der einen Bildsensor umfasst.

27. Linsenvorrichtung und Zubehör, das zwischen einem Kamerakörper (200), das einen Bildsensor umfasst, und der Linsenvorrichtung anbringbar ist,
wobei die Linsenvorrichtung nicht direkt an dem Kamerakörper (200) anbringbar ist und eine Fokussierlinseneinheit (FLU), die dazu gestaltet ist, in einer Optikachsenrichtung zum Fokussieren bewegt zu werden, und ein erstes Betätigungselement (103) umfasst, das dazu gestaltet ist, die Fokussierlinseneinheit (FLU) in der Optikachsenrichtung zu bewegen,
wobei das Zubehör ein zweites Betätigungselement (104) aufweist, das bezüglich einer einer Funktion betätigbar ist, die aus einer Vielzahl Funktionen, die sich von dem Fokussieren unterscheiden, auswählbar zugeordnet ist,
**dadurch gekennzeichnet, dass**
eine Breite des ersten Betätigungselements (103) in der Optikachsenrichtung größer ist als eine Breite des zweiten Betätigungselements (104) in der Optikachsenrichtung,
eine Oberfläche des ersten Betätigungselements (103) eine geradeförmige Nutstruktur hat und eine Oberfläche des zweiten Betätigungselements (104) eine netzförmige Nutstruktur hat und dadurch, dass
ein Material der Oberfläche des ersten Betätigungselements (103) elastisch verformbarer ist als ein Material der Oberfläche des zweiten Betätigungselements (104).

28. Linsenvorrichtung und Zubehör gemäß Anspruch 27, wobei die Oberfläche der zweiten Struktur eine rautenförmige Nutstruktur hat.

## Revendications

1. Accessoire comprenant :
une unité lentille de mise au point (FLU) qui doit être déplacée dans une direction d'axe optique pour la mise au point ;
un premier élément d'actionnement (103) qui est actionné pour déplacer l'unité lentille de mise au point (FLU) dans la direction d'axe optique ; et
un deuxième élément d'actionnement (104) qui peut être actionné par rapport à une parmi une fonction attribuée de manière sélective parmi une pluralité de fonctions différentes de la mise au point,
**caractérisé en ce que**
une largeur du premier élément d'actionnement (103) dans la direction d'axe optique est supérieure à une largeur du deuxième élément d'actionnement (104) dans la direction d'axe optique,
une surface du premier élément d'actionnement (103) a une structure de rainures de forme rectiligne, et une surface du deuxième élément d'actionnement (104) a une structure de rainures en forme de treillis, et **en ce que**
un matériau de la surface du premier élément d'actionnement (103) est davantage déformable élastiquement qu'un matériau de la surface du deuxième élément d'actionnement (104).

2. Accessoire selon la revendication 1, comprenant en outre :
une unité objectif à focale variable (ZLU) qui doit être déplacée dans la direction d'axe optique pour le zoom ; et
un troisième élément d'actionnement (120) qui déplace l'unité objectif à focale variable (ZLU) dans la direction d'axe optique,
dans lequel le deuxième élément d'actionnement (104), le premier élément d'actionnement (103), et le troisième élément d'actionnement (120) sont agencés dans cet ordre à partir d'un côté objet.

3. Accessoire selon la revendication 1, comprenant en outre :
une unité objectif à focale variable (ZLU) qui doit être déplacée dans la direction d'axe optique pour le zoom ; et
un troisième élément d'actionnement (120) qui déplace l'unité objectif à focale variable (ZLU) dans la direction d'axe optique,
dans lequel une surface du troisième élément d'actionnement (120) a une structure de rainures de forme rectiligne, et
dans lequel une largeur du premier élément d'actionnement (103) dans la direction d'axe optique est supérieure à une largeur du deuxième élément d'actionnement (104) dans la direction d'axe optique, et une largeur du troisième élément d'actionnement (120) dans la direction d'axe optique est supérieure à la largeur du premier élément d'actionnement (103) dans la direction d'axe optique.

4. Accessoire selon la revendication 2 ou 3, dans lequel le troisième élément d'actionnement (120) comporte une partie de grand diamètre, une partie de petit diamètre plus petite en diamètre que la partie de grand diamètre, et une partie de liaison entre la partie de grand diamètre et la partie de petit diamètre.

5. Accessoire selon la revendication 4, comprenant en outre une unité de sélection de mode de mise au point (110) configurée pour alterner entre un mode de mise au point automatique et un mode de mise au point manuelle,
dans lequel l'unité de sélection de mode de mise au point (110) est agencée à une position plus proche d'une image que la partie de petit diamètre du troisième élément d'actionnement (120).

6. Accessoire selon la revendication 2 ou 3, comprenant en outre une unité de sélection de mode de mise au point (110) configurée pour alterner entre un mode de mise au point automatique et un mode de mise au point manuelle,
dans lequel l'unité de sélection de mode de mise au point (110) est agencée entre le premier élément d'actionnement (103) et le troisième élément d'actionnement (120).

7. Accessoire selon l'une quelconque des revendications 1 à 6, comprenant en outre un premier élément annulaire (1061) et un second élément annulaire (1062), dans lequel le premier élément annulaire (1061) est agencé à une position plus proche de l'objet que le deuxième élément d'actionnement (104) et le second élément annulaire (1062) est agencé à une position plus proche de l'objet que le premier élément annulaire (1061).

8. Accessoire selon la revendication 7, dans lequel le premier élément annulaire (1061) comporte un repère de type indiquant un type de l'accessoire.

9. Accessoire selon la revendication 7 ou 8, dans lequel le second élément annulaire (1062) est fait de résine.

10. Accessoire selon l'une quelconque des revendications 1 à 4, comprenant en outre une unité de sélection de mode de mise au point (110) configurée pour alterner entre un mode de mise au point automatique et un mode de mise au point manuelle,
dans lequel le premier élément d'actionnement (103) est agencé entre le deuxième élément d'actionnement (104) et l'unité de sélection de mode de mise au point (110).

11. Accessoire selon l'une quelconque des revendications 1 à 10, dans lequel le deuxième élément d'actionnement (104) est agencé à une position plus proche de l'objet que le premier élément d'actionnement (103).

12. Accessoire selon l'une quelconque des revendications 1 à 11, comprenant en outre :
un premier élément extérieur (107) ; et
un second élément extérieur (108) exposé au moins partiellement à partir du premier élément extérieur (107) et ayant une couleur de surface différente d'une couleur de surface du premier élément extérieur (107).

13. Accessoire selon la revendication 12, dans lequel le premier élément extérieur (107) a une forme grâce à laquelle une forme d'une surface du second élément extérieur (108) qui est exposée à partir du premier élément extérieur (107) lorsqu'elle est vue à partir d'une première direction perpendiculaire à la direction d'axe optique est différente d'une forme d'une surface du second élément extérieur (108) qui est exposée à partir du premier élément extérieur (107) lorsqu'elle est vue à partir d'une seconde direction perpendiculaire à la direction d'axe optique et différente de la première direction.

14. Accessoire selon la revendication 13,
dans lequel le premier élément extérieur (107) comporte une première partie paroi (1071) et une seconde partie paroi (1072) recouvrant chacune une partie du second élément extérieur (108), et une surface d'extrémité côté image de la première partie paroi (1071) dans la direction d'axe optique est différente en position d'une surface d'extrémité côté image de la seconde partie paroi (1072) dans la direction d'axe optique, et
dans lequel, lorsqu'elle est vue à partir des première et seconde directions, la surface d'extrémité côté image de la première partie paroi (1071) est agencée à une position plus proche de l'image que la surface d'extrémité côté image du côté image de la seconde partie paroi (1072).

15. Accessoire selon la revendication 14, comprenant en outre une unité de sélection de mode de mise au point (110) configurée pour alterner entre un mode de mise au point automatique et un mode de mise au point manuelle,
dans lequel, lorsqu'elle est vue à partir de la seconde direction, l'unité de sélection de mode de mise au point (110) est agencée de façon à ce qu'une ligne prédéterminée s'étendant dans une direction parallèle à la direction d'axe optique traverse l'unité de sélection de mode de mise au point (110) et la seconde partie paroi (1072).

16. Accessoire selon la revendication 14 ou 15,
dans lequel le second élément extérieur (108) comporte un repère de fixation (1092), et
dans lequel, lorsqu'il est vu à partir de la seconde direction, le repère de fixation (1092) est agencé de façon à ce qu'une ligne prédéterminée s'étendant dans une direction parallèle à la direction d'axe optique traverse le repère de fixation (1092) et la seconde partie paroi (1072).

17. Accessoire selon l'une quelconque des revendications 1 à 16, comprenant en outre un cylindre intermédiaire (105) entre le deuxième élément d'actionnement (104) et le premier élément d'actionnement (103).

18. Accessoire selon la revendication 17, dans lequel une rotation du cylindre intermédiaire (105) autour de la direction d'axe optique est régulée.

19. Accessoire selon la revendication 17 ou 18, dans lequel une largeur du cylindre intermédiaire (105) dans la direction d'axe optique est inférieure à une largeur du deuxième élément d'actionnement (104) dans la direction d'axe optique et une largeur du premier élément d'actionnement (103) dans la direction d'axe optique.

20. Accessoire selon l'une quelconque des revendications 1 à 18, comprenant en outre un mécanisme de production de sensation de clic qui produit une sensation de clic lorsque le deuxième élément d'actionnement (104) est actionné.

21. Accessoire selon la revendication 20,
dans lequel la sensation de clic n'est pas produite lorsque le premier élément d'actionnement (103) est actionné, et dans lequel le mécanisme de production de sensation de clic produit la sensation de clic lorsque le deuxième élément d'actionnement (104) est actionné.

22. Accessoire selon l'une quelconque des revendications 1 à 21, dans lequel l'accessoire est un objectif interchangeable pouvant être fixé à et pouvant être détaché d'un corps de caméra (200).

23. Accessoire selon l'une quelconque des revendications 1 à 22,
dans lequel l'accessoire peut être fixé à et détaché d'un corps de caméra (200) comportant un capteur d'image et une unité de sélection, et
dans lequel l'une parmi une fonction est une fonction qui est sélectionnée par l'unité de sélection parmi la pluralité de fonctions.

24. Accessoire selon l'une quelconque des revendications 1 à 23, dans lequel la pluralité de fonctions comprennent une fonction d'ajustement de valeur d'ouverture, une fonction d'ajustement de vitesse d'obturation, une fonction d'ajustement de sensibilité de l'Organisation internationale de normalisation (ISO), et une fonction d'ajustement de valeur d'exposition.

25. Accessoire selon l'une quelconque des revendications 1 à 24, dans lequel une texture de surface du deuxième élément d'actionnement (104) est différente d'une texture de surface du premier élément d'actionnement (103).

26. Système de caméra comprenant :
l'accessoire selon l'une quelconque des revendications 1 à 25 ; et
un corps de caméra (200) qui comporte un capteur d'image.

27. Appareil à lentille et accessoire qui peut être fixé entre un corps de caméra (200) comportant un capteur d'image et l'appareil à lentille,
dans lesquels l'appareil à lentille ne peut pas être fixé directement au corps de caméra (200) et comporte une unité lentille de mise au point (FLU) configurée pour être déplacée dans une direction d'axe optique pour la mise au point et un premier élément d'actionnement (103) configuré pour déplacer l'unité lentille de mise au point (FLU) dans la direction d'axe optique,
l'accessoire comprenant un deuxième élément d'actionnement (104) qui peut être actionné par rapport à une parmi une fonction attribuée de manière sélective parmi une pluralité de fonctions qui diffèrent de la mise au point, **caractérisés en ce que**
une largeur du premier élément d'actionnement (103) dans la direction d'axe optique est supérieure à une largeur du deuxième élément d'actionnement (104) dans la direction d'axe optique,
une surface du premier élément d'actionnement (103) a une structure de rainures de forme rectiligne, et une surface du deuxième élément d'actionnement (104) a une structure de rainures en forme de treillis, et **en ce que**
un matériau de la surface du premier élément d'actionnement (103) est davantage déformable élastiquement qu'un matériau de la surface du deuxième élément d'actionnement (104).

28. Appareil à lentille et accessoire selon la revendication 27, dans lesquels la surface de la seconde structure a une structure de rainures en forme de losanges.
